# EUROPEAN PATENT SPECIFICATION

(11) **EP 3 060 348 B1**
(45) Date of publication and mention of the grant of the patent: **23.01.2019**
(21) Application number: 13783027.9
(22) Date of filing: 22.10.2013
(51) Int. Cl.: B03B 9/06, B02C 19/06, B02C 23/08, A23L 15/00

(54) **METHOD OF PROCESSING EGGSHELL RESIDUES**
VERFAHREN ZUR VERARBEITUNG VON EIERSCHALENRÜCKSTÄNDEN
PROCÉDÉ DE TRAITEMENT DE RÉSIDUS DE COQUILLES D'OEUFS

(43) Date of publication of application: 31.08.2016
(73) Proprietor: Biovotec AS, 0218 Oslo (NO)
(72) Inventor: UTGÅRD, Bjørn, N-0556 Oslo (NO); AMUNDSEN, Ståle, N-3803 Bø i Telemark (NO); SUSO, Henri-Pierre, N-0276 Oslo (NO)
(74) Representative: AWA Sweden AB
(86) International application number: PCT/EP2013/072049
(87) International publication number: WO 2015/058790

(56) References cited:
- WO-A2-2011/143146
- JP-A- H07 227 551
- JP-A- H08 173 838
- US-A1- 2002 027 173
- US-B1- 6 971 594

## Description

### Technical Field

The present invention concerns a method of processing eggshell residues, which emanate from an egg breaking unit and comprise eggshell portions as well as membrane portions.

### Prior Art

Eggshell residues emanating from an egg breaking unit form a valuable source of both minerals (mostly calcium) from the eggshell portions and proteins from the membrane portions. However, in order to make use of that source first the eggshell portions and the membrane portions have to be strictly separated, which has to be done in a careful way so that the protein content is not deteriorated.

From US 6 649 203 B1 an eggshell processing method is known, comprising separation of outer eggshell portions and membrane portions. According to the known method fresh eggshell residues are first centrifuged to remove adhering liquid egg. Then the eggshell residues are washed in water to remove residual liquid egg. The next step of the known method comprises once again centrifuging and then, at a temperature of just slightly less than 90°C, drying to a low moisture content. Next comes vibratory screening aiming at removing loose membrane portions. The remainder is then milled coarsely and treated pneumatically to remove some additional freed membrane portions, and then milled finely before packaging.

The fact that the known method comprises a washing step, makes it require not only use of plenty of water but also of extra centrifuging and drying steps. Hence, the known method is neither particularly economical nor environmentally friendly, and above that the rather high drying temperature of just slightly less than 90°C tends to deteriorate quality of the proteins of the membrane portions.

The article from Ny Teknik, "Tornado maler ned avfallet", discloses a method of processing eggshell, with the steps of feeding eggshell residues, having a maximum particle size of 35 mm into a cyclone, which, at a speed of about 160m/s, is driven by a process gas, which has a temperature of less than 45°C, vortex processing of the eggshell residues in that cyclone to reduce particle size and to peel off said membrane portions, such that said eggshell portions become separated from said membrane. WO 2011/143146 A2 discloses a method of processing eggshell residues, comprising eggshell portions as well as membrane portions, with the steps of feeding eggshell residues via an egg processing venturi, to reduce particle size and to peel said membrane portions off of said eggshell portions, such that said eggshell portions become separated from said membrane, driven by a process gas, into a separate cyclone, and then to a shaker screen.

### Object of the Invention

In the light of the above, it is an object of the present invention to mitigate the drawbacks of the prior art solution and to provide a method of processing eggshell residues which is economically and environmentally more feasible and further less harmful to the proteins involved.

### Brief Summary of the Invention

According to the invention this is achieved by means of a method of processing eggshell residues, which emanate from an egg breaking unit and comprise eggshell portions as well as membrane portions, according to claim 1.

The method according to the invention does not comprise any washing step. This is environmentally beneficial and saves equipment and operation costs. Further, it does not comprise any centrifuging step to throw washing liquid off, which is advantageous for the same reasons as the lack of a washing step. And finally, the method according to the invention does not comprise an energy consuming drying step operating at a temperature just slightly below 90°C and therefore tending to deteriorate protein quality.

The method according to the invention comprises the further step of controlling time between feeding eggshell residues into and releasing said mixture out of said cyclone by adjusting an eggshell residue feed rate in relation to a total process gas feed rate, wherein said time is confined into an interval of 0,5 s to 5 s. In other words, two factors that can be easily controlled, that is the eggshell residue feed rate and the process gas feed rate, are suitably used to arrive at an optimum result, while energy consumption is kept low and process time reduced to an extremely short time.

In order to take care of as much liquid egg as possible the method according to the invention comprises the further step of centrifuging the eggshell residues prior to feeding them into said cyclone. This leads to the additional advantage that the following cyclone step can be performed under dryer and therefore better conditions.

According to a preferred embodiment the method according to the invention comprises the step of continuous feeding of eggshell residues into the cyclone. Continuous feeding leads to maximum use of the equipment at hand and helps achieving stable operating conditions for the cyclone used.

During the step of sorting blowing of process gas to pneumatically expel said membrane portion part off of sorting screens and out of the sorting device has turned out to be most efficient. However, that does not exclude the possibility to use an all different sorting device, such as an aspirator.

Preferably, according to the invention both said eggshell portion part and said membrane portion part are dried after having been sorted. Further, said parts are optionally milled as well after having been sorted. In any case the goal of these measures is to arrive at end products which are of an even and high quality and suitable for packaging and transport.

### Brief Description of the Drawings

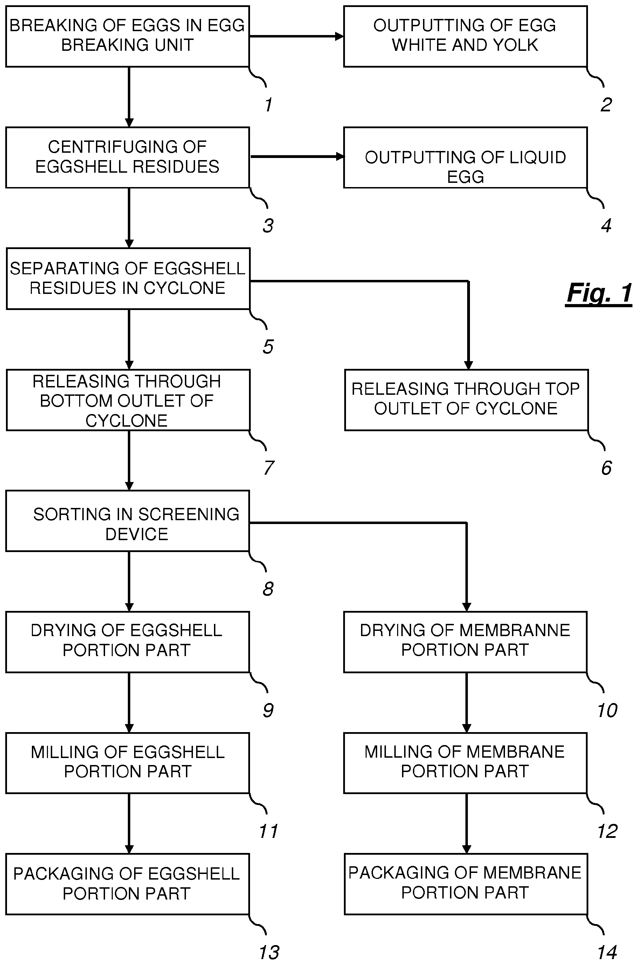

On the drawings figure 1 shows a flow chart which illustrates steps of a method according to a preferred embodiment of the invention.

### Detailed Description of a Preferred Embodiment

Hundreds of thousands of tons of eggshell residues are produced at egg breaking facilities worldwide. While eggshells contain substances with high potential economic value, eggshell residues are often disposed as waste. Meanwhile, the demand for pure and clean, natural mineral and protein ingredients is growing in a number of industries, including cosmetics, cosmeceuticals, nutraceuticals, pharmaceuticals, functional food, animal feed, etc. Against that background an object of the present invention is to provide a method of processing eggshell residues in order to produce eggshell derived ingredients.

Eggshell residues comprise protein rich membrane particles and mineral rich shell particles which are entangled and must be separated into two separate material flows to allow further processing and commercial application. Besides problems caused by particle entanglement, another problem met in this context is that proteins are sensitive to temperature and must be kept at temperatures below 55°C to avoid product degradation.

This has made the inventors look for a method more lenient than known solutions and made them finally arrive at a method comprising use of a low temperature, high speed cyclone. By this is meant a cyclone driven by a process gas holding a temperature of less than 85°C and a speed exceeding 60 m/s.

It turns out that such a cyclone is able to peel membrane particles off eggshell particles within a few seconds or even fractions of a second, thus guaranteed keeping temperature of the particles involved sufficiently low to avoid degradation. Within the cyclone the separation process makes use of the difference in brittleness and elasticity between the eggshell particles (predominantly containing minerals) and the membrane particles (predominantly containing proteins) to separate entangled (composite) particles into pure mineral and protein particles.

In the following the above is illustrated by means of a detailed description of a preferred embodiment of the method according to the invention with reference being had at the enclosed drawings.

In the drawings box 1 illustrates an egg breaking step in an egg breaking unit. This unit outputs egg white and yolk (c.f. box 2) and eggshell residues. These comprise eggshell and membrane portions as well as some liquid egg and are fed into a centrifuge (c.f. box 3).

In the centrifuge most of the liquid egg is thrown off the eggshell and membrane portions and led to an output (c.f. box 4), while the remaining eggshell residue particles, having a size of 0,5 mm to 30 mm and a wet basis moisture content of 3% to 40%, are fed into a high speed cyclone (c.f. box 5).

The cyclone is driven by a process gas, which holds a temperature of preferably less than 60°C and a speed preferably within an interval of 70 m/s to 340 m/s. Within the cyclone the process gas causes a vortex flow, that entangles the eggshell residues and makes them collide with each other and cyclone walls. This makes the brittle eggshell portions break into smaller pieces while the elastic membrane portions are peeled off, all within a stay time inside the cyclone of preferably between 1 s and 5 s.

Through a top outlet of the cyclone a mix of mainly gas, vapour and droplets is released (c.f. box 6), and through a bottom outlet of the cyclone a mixture mainly containing separated eggshell portions and membrane portions are released (c.f. box 7).

Said mixture of eggshell portions and membrane portions is then fed into a sorting device (c.f. box 8), in which sorting into an eggshell portion part and a membrane portion part is performed, for instance by means of vibrating screens and/or an aspirator, i.e. means well known to a person skilled in the art.

From the sorting device the eggshell portion part is optionally fed into a dryer (c.f. box 9), in which the moisture content is lowered to an adequate level, e.g. for packaging and storing. The same goes for the membrane portion part, which is fed into a dryer (c.f. box 10), also in order to arrive at an appropriate moisture content level for packaging, transport and storing without degradation.

From the dryer the eggshell portion part is then led into an optional mill (c.f. box 11), in which particle size is reduced to a desired even level, before the particles reach a final packaging stage (c.f. box 13).

The membrane portion part is optionally led from the dryer into a mill (c.f. box 12), in which it is ground before packaging (c.f. box 14).

It is obvious to a person skilled in the art that there are several ways of altering the method described above within the frame set up by the appendent claims. However, no matter how the method is altered, it is important that the protein content of the membrane portions always is treated carefully and not exposed to temperatures causing degradation.

## Claims

1. A method of processing eggshell residues, which emanate from an egg breaking unit (1) and comprise eggshell portions as well as membrane portions, the method comprising the following steps:
centrifuging (3) the eggshell residues, having a particle size of 0,5 mm to 40 mm and a wet basis moisture content of 3% to 40% from said egg breaking unit (1) prior to feeding them into a cyclone (5),
feeding the centrifuged eggshell residues into said cyclone (5), which, at a speed exceeding 60 m/s, and preferably between 70 m/s and 340 m/s, is driven by a process gas, which has a temperature of less than 85°C,
in said cyclone (5), vortex processing of the eggshell residues to reduce particle size and to peel said membrane portions off of said eggshell portions, such that said eggshell portions become separated from said membrane portions,
through a top outlet (6) of said cyclone (5), releasing mainly a mix of process gas, vapour and droplets,
through a bottom outlet (7) of said cyclone (5), releasing mainly a mixture of separated eggshell portions and membrane portions,
controlling time between feeding eggshell residues into and releasing said mixture out of said cyclone (5) by adjusting an eggshell residue feed rate in relation to a total process gas feed rate, wherein said time is confined into an interval of 0,5 s to 5 s, and,
in a sorting device (8), sorting of said released mixture into an eggshell portion part and a membrane portion part.

2. Method according to claim 1, wherein the step of feeding comprises continuous feeding of eggshell residues into the cyclone (5).

3. Method according to claim 1 or 2, wherein the step of sorting comprises blowing of air to pneumatically expel said membrane portion part off of sorting screens and out of the sorting device (8).

4. Method according to any one of claims 1-3, comprising the further step of drying (9) said eggshell portion part.

5. Method according to any one of claims 1-4, comprising the further step of drying (10) said membrane portion part.

6. Method according to any one of claims 1-5, comprising the further step of milling (11) said eggshell portion part.

7. Method according to any one of claims 1-6, comprising the further step of milling (12) said membrane portion part.

## Patentansprüche

1. Verfahren zum Verarbeiten von Eierschalenresten, die von einer Ei brechenden Einheit (1) stammen und Eierschalenabschnitte sowie Eihautabschnitte umfassen, wobei das Verfahren die folgenden Schritte umfasst:
Zentrifugieren (3) der Eierschalenreste, die eine Partikelgröße von 0,5 mm bis 40 mm und einen Feuchtigkeitsgehalt auf Feuchtbasis von 3 % bis 40 % aufweisen, von der Ei brechenden Einheit (1), bevor sie einem Fliehkraftabscheider (5) zugeführt werden,
Zuführung der zentrifugierten Eierschalenreste in den Fliehkraftabscheider (5), der bei einer Geschwindigkeit von mehr als 60 m/s und vorzugsweise zwischen 70 m/s und 340 m/s durch ein Prozessgas angetrieben wird, das eine Temperatur von weniger als 85 °C aufweist,
Wirbelverarbeiten der Eierschalenreste in dem Fliehkraftabscheider (5) zur Reduzierung der Partikelgröße und zum Abziehen der Eihautabschnitte von den Eierschalenabschnitten, derart, dass die Eierschalenabschnitte von den Eihautabschnitten getrennt werden,
Freisetzen hauptsächlich einer Mischung aus Prozessgas, Dampf und Tröpfchen durch einen oberen Auslass (6) des Fliehkraftabscheiders (5),
Freisetzen hauptsächlich einer Mischung aus getrennten Eierschalenabschnitten und Eihautabschnitten durch einen unteren Auslass (7) des Fliehkraftabscheiders (5),
Kontrollieren der Zeit zwischen dem Zuführen von Eierschalenresten in den Fliehkraftabscheider (5) und dem Freisetzen der Mischung aus dem Fliehkraftabscheider (5) durch Anpassen einer Zuführgeschwindigkeit der Eierschalenreste relativ zu einer Gesamtzuführgeschwindigkeit des Prozessgases, wobei die Zeit auf ein Intervall von 0,5 bis 5 s begrenzt ist, und
Sortieren der freigesetzten Mischung in einer Sortiervorrichtung (8) in einen Eierschalenabschnittteil und einen Eihautabschnittteil.

2. Verfahren nach Anspruch 1, wobei der Schritt des Zuführens das kontinuierliche Zuführen von Eierschalenresten in den Fliehkraftabscheider (5) umfasst.

3. Verfahren nach Anspruch 1 oder 2, wobei der Schritt des Sortierens das Blasen von Luft umfasst, um den Eihautabschnittteil pneumatisch von den Sortiersieben und aus der Sortiervorrichtung (8) herauszuschleudern.

4. Verfahren nach einem der Ansprüche 1 bis 3, umfassend den weiteren Schritt des Trocknens (9) des Eierschalenabschnittteils.

5. Verfahren nach einem der Ansprüche 1 bis 4, umfassend den weiteren Schritt des Trocknens (10) des Eihautabschnittteils.

6. Verfahren nach einem der Ansprüche 1 bis 5, umfassend den weiteren Schritt des Mahlens (11) des Eierschalenabschnittteils.

7. Verfahren nach einem der Ansprüche 1 bis 6, umfassend den weiteren Schritt des Mahlens (12) des Eihautabschnittteils.

## Revendications

1. Procédé de traitement de résidus de coquilles d'oeufs, qui proviennent d'une unité de cassage d'oeufs (1) et comprennent des parties de coquilles d'oeufs ainsi que des parties de membrane, le procédé comprenant les étapes suivantes :
la centrifugation (3) des résidus de coquilles d'oeufs, ayant une taille de particules de 0,5 mm à 40 mm et une teneur en eau base humide de 3 % à 40 %, depuis ladite unité de cassage d'oeufs (1) avant de les alimenter dans un cyclone (5),
l'alimentation des résidus de coquilles d'oeufs centrifugés dans ledit cyclone (5), qui, à une vitesse dépassant 60 m/s, et de préférence entre 70 m/s et 340 m/s est entraînée par un gaz de procédé, qui a une température inférieure à 85 °C,
dans ledit cyclone (5), un traitement par tourbillon des résidus de coquilles d'oeufs pour réduire la taille de particules et éplucher lesdites parties de membrane desdites parties de coquilles d'oeufs, de telle sorte que lesdites parties de coquilles d'oeufs se séparent desdites parties de membrane,
à travers une sortie supérieure (6) dudit cyclone (5), la libération d'un mélange composé principalement de gaz de procédé, de vapeur et de gouttelettes,
à travers une sortie inférieure (7) dudit cyclone (5), la libération d'un mélange composé principalement de parties de coquilles d'oeufs et de parties de membrane séparées,
la régulation de la durée entre l'alimentation en résidus de coquilles d'oeufs dans ledit et la libération dudit mélange hors dudit cyclone (5) par ajustement d'un taux d'alimentation en résidus de coquilles d'oeufs relativement à un taux d'alimentation de gaz de procédé, dans lequel ladite durée est limitée à un intervalle de 0,5 s à 5 s, et,
dans un dispositif de tri (8), le tri dudit mélange libéré pour donner une part de parties de coquilles d'oeufs et une part de parties de membranes.

2. Procédé selon la revendication 1, dans lequel l'étape d'alimentation comprend l'alimentation continue des résidus de coquilles d'oeufs dans le cyclone (5).

3. Procédé selon la revendication 1 ou 2, dans lequel l'étape de tris comprend le fait de souffler de l'air pour l'expulsion pneumatique de ladite part des parties de membranes des tamis de tri et du dispositif de tri (8).

4. Procédé selon l'une quelconque des revendications 1 à 3, comprenant l'étape supplémentaire de séchage (9) de ladite part de parties de coquilles d'oeufs.

5. Procédé selon l'une quelconque des revendications 1 à 4, comprenant l'étape supplémentaire de séchage (10) de ladite part de parties de membranes.

6. Procédé selon l'une quelconque des revendications 1 à 5, comprenant l'étape supplémentaire de broyage (11) de ladite part de parties de coquilles d'oeufs.

7. Procédé selon l'une quelconque des revendications 1 à 6, comprenant l'étape supplémentaire de broyage (12) de ladite part de parties de membranes.
